# EUROPÄISCHE PATENTSCHRIFT

(11) **EP 2 962 008 B1**
(45) Veröffentlichungstag und Bekanntmachung des Hinweises auf die Patenterteilung: **05.09.2018**
(21) Anmeldenummer: 14700329.7
(22) Anmeldetag: 14.01.2014
(51) Int. Cl.: F16D 55/28, F16D 66/02

(54) **ELEKTROMAGNETISCH BETÄTIGBARE FEDERDRUCKBREMSE**
ELECTROMAGNETICALLY ACTUATABLE SPRING-PRESSURE BRAKE
FREIN À RESSORT À ACTIONNEMENT ÉLECTROMAGNÉTIQUE

(30) Priorität: 01.03.2013 DE 102013003372
(43) Veröffentlichungstag der Anmeldung: 06.01.2016
(73) Patentinhaber: SEW-EURODRIVE GmbH & Co. KG, 76646 Bruchsal (DE)
(72) Erfinder: FICHTNER-PFLAUM, Gerolf, 76703 Kraichtal-Unteröwisheim (DE)
(86) Internationale Anmeldenummer: PCT/EP2014/000065
(87) Internationale Veröffentlichungsnummer: WO 2014/131482

(56) Entgegenhaltungen:
- DE-U1-202011 005 655
- US-A- 4 020 454
- US-A- 5 421 436

## Beschreibung

Die Erfindung betrifft eine Bremsanordnung, insbesondere aufweisend eine elektromagnetisch betätigbare Federdruckbremse.

Es ist allgemein bekannt, dass eine elektromagnetisch betätigbare Federdruckbremse eine Ankerscheibe aufweist, die vom Elektromagneten angezogen werden kann.

Aus der DE 20 2011 005655 U1 ist eine Bremsanordnung, aufweisen eine elektromagnetisch betätigbare Federdruckbremse bekannt, wobei eine Ankerscheibe axial verschiebbar angeordnet ist und drehfest mit einem spulenkern einer Wicklung verbunden ist, wobei eine Schalteinheit einen verschiebbaren Druckschaltkopf aufweist, mit dem die Schalteinheit betätigbar ist.

Aus der US 5 421 436 A ist ein orientierungsfreier Bremsmechanismus bekannt.

Aus der US 4 020 454 A ist ein Bremsüberwachungssystem bekannt.

Der Erfindung liegt daher die Aufgabe zugrunde, eine Bremsanordnung weiterzubilden, wobei die Sicherheit erhöht sein soll.

Erfindungsgemäß wird die Aufgabe bei der Bremsanordnung nach den in Anspruch 1 angegebenen Merkmalen gelöst.

Wichtige Merkmale bei der Bremsanordnung, insbesondere aufweisend eine elektromagnetisch betätigbare Federdruckbremse, sind, dass eine Ankerscheibe verschiebbar, insbesondere axial verschiebbar, angeordnet ist, insbesondere drehfest verbunden ist mit einem Spulenkern einer Wicklung, insbesondere einer Bremsspule,
wobei eine Schalteinheit einen verschiebbaren Druckschaltkopf aufweist, mit dem die Schalteinheit betätigbar ist,
**wobei** die Schalteinheit, insbesondere das Gehäuse der Schalteinheit, mit einem Halteteil verbunden ist, an welchem eine elastisch auslenkbare Zunge, insbesondere eine gegenüber dem Gehäuse der Schalteinheit elastisch auslenkbare Zunge angeordnet ist, insbesondere ausgeformt ist,
wobei eine Übertragungseinheit an der Ankerscheibe verbunden ist und die Zunge an einem ersten Bereich berührt und auslenkt
wobei die Zunge den Druckschaltkopf an einem vom ersten Bereich beabstandeten zweiten Bereich berührt.

Von Vorteil ist dabei, dass der von der Ankerscheibe ausgeführte Hub mittels der Zunge vergrößert wird. Dies erfolgt durch das einfache Hebelprinzip. Denn die Zunge wird im ersten Bereich gedrückt von der Ankerscheibe und im zweiten Beriech, der weiter entfernt ist vom Gelenkbereich als der erste Bereich, zur Betätigung der Schalteinheit auf den Druckschaltkopf gedrückt.

Wichtige Merkmale bei der Bremsanordnung, insbesondere aufweisend eine elektromagnetisch betätigbare Federdruckbremse, sind, dass eine Ankerscheibe verschiebbar, insbesondere axial verschiebbar, angeordnet ist, insbesondere drehfest verbunden ist mit einem Spulenkern einer Wicklung, insbesondere einer Bremsspule,
wobei zwei in Umfangsrichtung voneinander beabstandete Schalteinheiten vorgesehen sind,
wobei jede Schalteinheit einen jeweiligen verschiebbaren Druckschaltkopf aufweist, mit dem die jeweilige Schalteinheit betätigbar ist,
**wobei** die jeweilige Schalteinheit, insbesondere das Gehäuse der jeweiligen Schalteinheit, mit einem jeweiligen Halteteil verbunden ist, an welchem eine jeweilige elastisch auslenkbare Zunge, insbesondere eine gegenüber dem jeweiligen Gehäuse der jeweiligen Schalteinheit jeweilige elastisch auslenkbare Zunge angeordnet ist, insbesondere ausgeformt ist,
wobei eine jeweilige Übertragungseinheit an der Ankerscheibe verbunden ist und die jeweilige Zunge an einem jeweiligen ersten Bereich berührt und auslenkt
wobei die jeweilige Zunge den jeweiligen Druckschaltkopf an einem vom jeweiligen ersten Bereich beabstandeten jeweiligen zweiten Bereich berührt.

Von Vorteil ist dabei, dass eine erste Schalteinheit zur Überprüfung der Funktion der Bremsanordnung, also Lüften oder Einfallen der Bremsanordnung, verwendbar ist und die zweite Schalteinheit zur Überprüfung des Verschleißes des Bremsbelags verwendbar ist. Denn bei Abnutzung des Bremsbelags wird der Hub der Ankerscheibe größer und erreicht bei unzulässiger Abnutzung einen kritischen Wert.

Bei einer vorteilhaften Ausgestaltung ist die Zunge an einem als Gelenk wirksamen Bereich mit dem restlichen Halteteil verbunden, insbesondere wobei der als Gelenk wirksame Bereich als Drehgelenk ausgeführt ist oder wobei er einteilig und/oder einstückig am Halteteil ausgebildet ist, insbesondere als Stanz-Biegeteil. Von Vorteil ist dabei, dass eine einfache Fertigung anwendbar ist.

Bei einer vorteilhaften Ausgestaltung ist das Halteteil ein Stanz-Biegeteil. Von Vorteil ist dabei, dass eine einfache Fertigung ausführbar ist.

Bei einer vorteilhaften Ausgestaltung vergrößert die Zunge den Hub der Ankerscheibe, indem der zweite Bereich weiter entfernt ist vom als Gelenk wirksamen Bereich als der erste Bereich. Von Vorteil ist dabei, dass ein einfaches Wegevergrößerungsprinzip angewendet ist.

Bei einer vorteilhaften Ausgestaltung weist die Übertragungseinheit einen Bolzen auf, der formschlüssig mit der Ankerscheibe verbunden ist, insbesondere eingepresst, eingeschraubt und/oder geschweißt,
wobei in eine Gewindebohrung des Bolzens eine Schraube eingeschraubt ist, insbesondere die mit einer Kontermutter am Bolzen fixiert ist,
wobei der Schraubenkopf der Schraube die Zunge berührt, insbesondere im ersten Bereich. Von Vorteil ist dabei, dass eine einfache stabile Verbindung herstellbar ist.

Bei einer vorteilhaften Ausgestaltung sind die Verschiebungsrichtung der Ankerscheibe und die Betätigungsrichtung des Druckschaltkopfes parallel angeordnet. Von Vorteil ist dabei, dass wiederum eine einfache Ausführung ermöglicht ist und außerdem kein weiteres Gelenk notwendig ist.

Bei einer vorteilhaften Ausgestaltung ist der Bolzen radial ausgerichtet, wobei die axiale Richtung von der Wellenachse der von der Bremsanordnung abzubremsenden beziehungsweise abgebremsten Welle, insbesondere Rotorwelle eines Elektromotors, definiert ist. Von Vorteil ist dabei, dass die Übertragung des Hubs der ankerscheibe auf einem größeren Radialabstand zur Schalteinheit ausführbar ist als im von der Ankerscheibe abgedeckten Radialabstandsbereich.

Bei einer vorteilhaften Ausgestaltung ist die Schraubenachse der Schraube in axialer Richtung ausgerichtet,
insbesondere wobei die Zunge im Wesentlichen in axialer Richtung auslenkbar ist. Von Vorteil ist dabei, dass eine einfache Anordnung der Teile ermöglicht ist. Insbesondere ist der erste Bereich an der in axialer Richtung gesehenen Oberseite der Zunge und der zweite Bereich an der entsprechenden Unterseite der Zunge.

Bei einer vorteilhaften Ausgestaltung weist die von der Bremsanordnung abzubremsende Welle eine Außenverzahnung auf, mit welcher die Innenverzahnung eines Bremsbelagträgers im Eingriff steht, so dass dieser axial verschiebbar aber drehfest mit der Welle verbunden ist,
wobei der Bremsbelagträger axial auf der von der Ankerscheibe abgewandten Seite angeordnet ist,
wobei der Bremsbelagträger axial zwischen Ankerscheibe und einem eine Bremsfläche aufweisenden Teil angeordnet ist, insbesondere wobei das Teil ein Gehäuseteil eines Elektromotors ist, insbesondere ein Lagerschild, welches ein Lager der Welle aufnimmt,
wobei Federelemente zwischen Ankerscheibe und Spulenkern angeordnet sind, so dass bei Bestromung der im Spulenkern aufgenommenen Wicklung, insbesondere in einem ringförmigen Ausnehmung aufgenommenen Ringwicklung, die Ankerscheibe entgegen der von den Federelementen erzeugten Federkraft zum Spulenkern hin verschoben wird. Von Vorteil ist dabei, dass die Erfindung bei einer einfach herstellbaren Federdruckbremse anwendbar ist und somit die Sicherheit derselben erhöhbar ist.

Bei einer vorteilhaften Ausgestaltung ist das Halteteil zumindest zweiteilig ausgeführt, insbesondere also aus mindestens zwei Teilen. Von Vorteil ist dabei, dass diese Teile mit zueinander unterschiedlicher Wandstärke ausführbar sind.

Bei einer vorteilhaften Ausgestaltung sind die zumindest zwei Teile des Halteteils Stanz-Biegeteile, insbesondere mit jeweils unterschiedlicher Blechwandstärke. Von Vorteil ist dabei, dass eine einfache Herstellung ermöglicht ist.

Bei einer vorteilhaften Ausgestaltung ist an einem ersten Teil, insbesondere Oberteil, die Zunge ausgebildet und ein oder das andere Teil, insbesondere Unterteil, weist eine größere Wandstärke, insbesondere Blechwandstärke, auf als das Oberteil. Von Vorteil ist dabei, dass mittels der wandstärken verschiedene mechanische Funktionen optimierbar sind.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein Querschnitt durch eine erfindungsgemäße Bremsanordnung gezeigt.

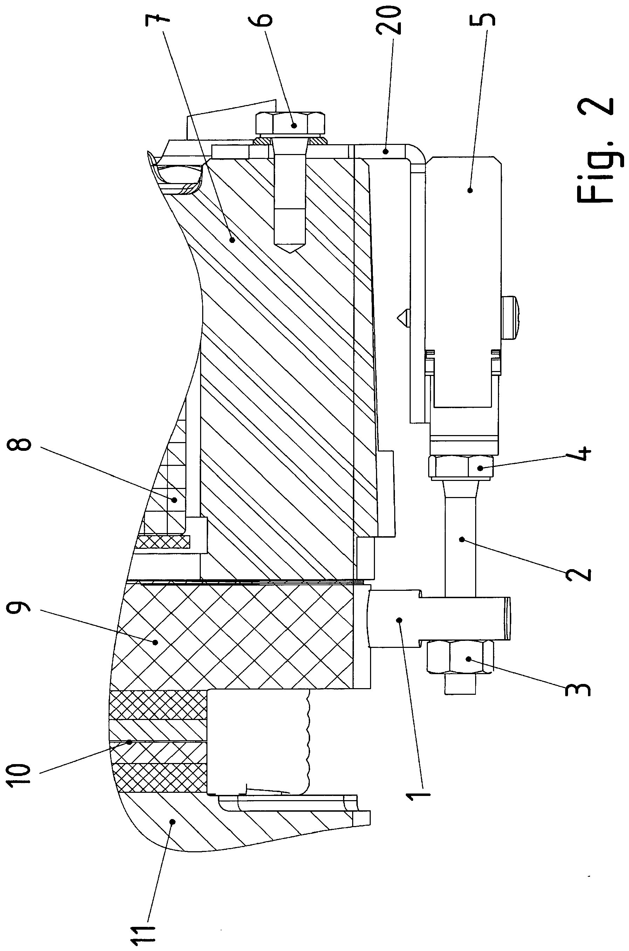

In der Figur 2 ist ein vergrößerter Ausschnitt hierzu gezeigt.

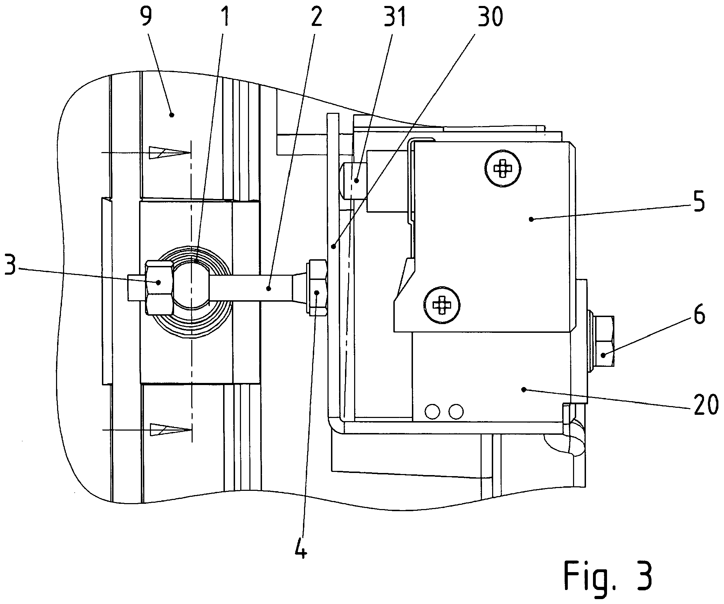

In der Figur 3 ist eine Draufsicht hierzu gezeigt.

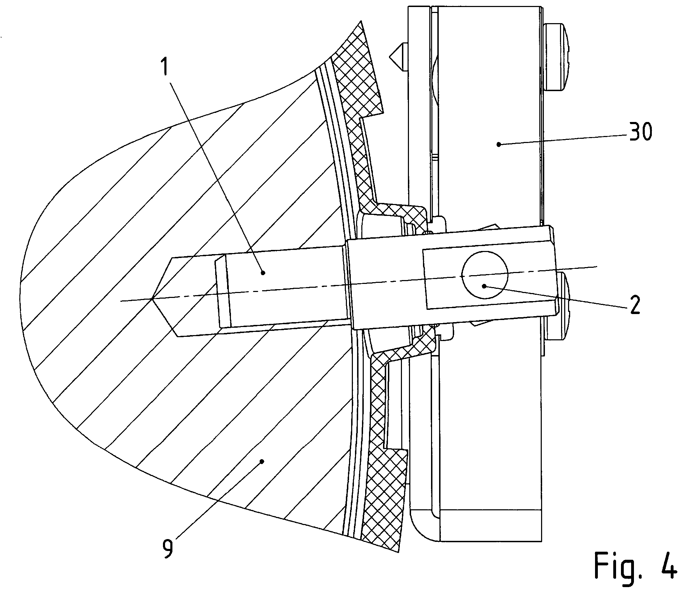

In der Figur 4 ist ein Ausschnitt aus einem zugehörigen Längsschnitt gezeigt.
In der Figur 5 ist eine Draufsicht auf die erfindungsgemäße Bremsanordnung gezeigt.
In der Figur 6 ist eine Schrägansicht auf die erfindungsgemäße Bremsanordnung gezeigt.
In der Figur 7 ist eine Schrägansicht auf die Schalteinheit 5 und das Halteteil 20 gezeigt zusammen mit dem Übertragungsmittel.
In der Figur 8 ist eine Schrägansicht auf die Schalteinheit 5 und das Halteteil 20 gezeigt zusammen mit dem Übertragungsmittel, wobei eine Ausnehmung 80 die elastische Auslenkbarkeit der Zunge 30 verbessert.
In Figur 9 ist ein Ausführungsbeispiel mit zweiteilig ausgeführtem Halteteil gezeigt.

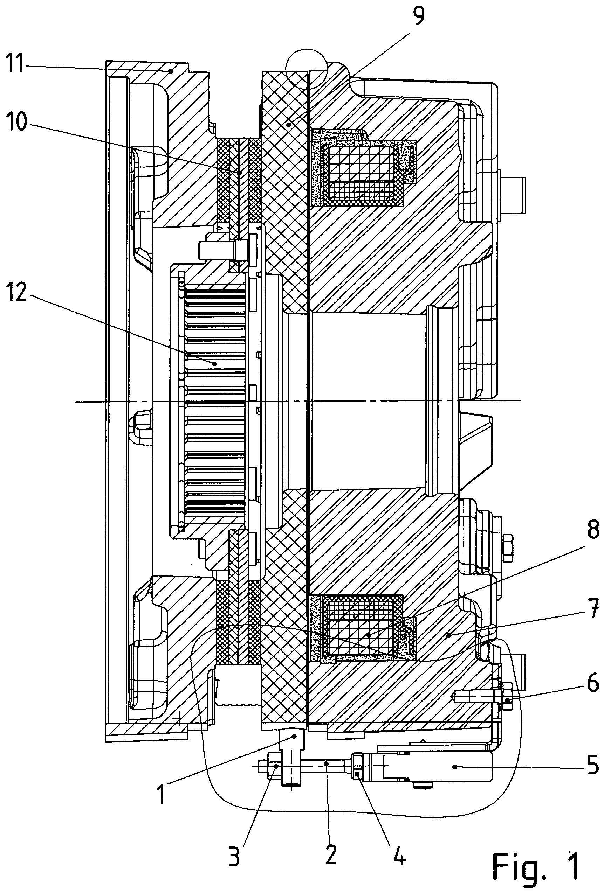

Wie in Figur 1 gezeigt, weist die erfindungsgemäße Bremsanordnung einen Spulenkern 7 auf, der eine ringförmige Ausnehmung aufweist, in welcher eine Spule 8, insbesondere Ringwicklung, aufgenommen ist.

Bei Bestromung der Spule 8 wird eine Ankerscheibe 9 zum Spulenkern 7 hin entgegen der Federkraft von sich am Spulenkern 7 abstützenden Federelementen gezogen, so dass die als Federdruckbremse ausgeführte Bremsanordnung gelüftet wird.

Die Ankerscheibe 9 ist drehfest aber axial verschiebbar mit dem Spulenkern 7 verbunden.

Der Belagträger 10 weist axial beidseitig einen Bremsbelag auf und ist mittels einer an ihm vorgesehenen oder mit ihm verbundenen Innenverzahnung drehfest aber axial verschieblich mit einer Außenverzahnung, also Mitnehmerverzahnung 12, der abzubremsenden Welle verbunden.

Beim Nicht-Bestromen der Spule 8 drücken die an dem Spulenkern 7 abgestützten Federelemente die Ankerscheibe 9 axial weg von dem Spulenkern 7 auf den Belagträger 10, der mit seiner Innenverzahnung auf der mit der Innenverzahnung im Eingriff stehenden Außenverzahnung axial auf die Bremsfläche gedrückt wird. Somit wird der der Ankerscheibe 9 zugewandt angeordnete Bremsbelag des Bremsbelagträgers 10 auf die Ankerscheibe gedrückt und der andere Bremsbelag auf die Bremsfläche.

Die Bremsfläche ist auf einem Gehäuseteil angeordnet, welches mit dem Spulenkern 7 fest verbunden ist. Das Gehäuseteil ist vorzugsweise ein Lagerschild eines Elektromotors, dessen Rotorwelle in diesem Lagerschild mittels dort aufgenommenem Lager gelagert ist und die von der Bremsanordnung abzubremsende Welle ist.

Zur Funktionsüberwachung und zur Verschleißüberwachung ist jeweils eine Schalteinheit 5 an der Bremsanordnung vorgesehen.

Ein Bolzen 1 ist in einer Radialbohrung der Ankerscheibe 9 vorgesehen und mit der Ankerscheibe 9 verbunden, insbesondere eingepresst, klebeverbunden und/oder schweißverbunden.

In den radial von der Ankerscheibe 9 hervorstehenden Bolzen 1 ist eine Schraube 2 mit ihrem Gewindebereich in eine Gewindebohrung des Bolzens 1 eingeschraubt, die in axialer Richtung ausgerichtet ist. Auf der vom Schraubenkopf 4 der Schraube 2 abgewandten Seite der Gewindebohrung ist eine Kontermutter 3 angeordnet und gegen den Bolzen 1 angezogen.

Die Schalteinheit 5 ist an einem Halteteil 20 angeschraubt, welches mittels einer Schraube 6 mit dem Spulenkern 7 schraubverbunden ist.

Das Halteteil ist vorzugsweise als Blechteil, insbesondere als Stanz-Biegeteil, hergestellt.

Das Halteteil 20 weist eine Zunge 30 auf, die elastisch auslenkbar ist, insbesondere in axialer Richtung. Hierzu drückt abhängig vom axialen Hub, also abhängig von der jeweiligen axialen Position der Ankerscheibe 9, der Schraubenkopf 4 der Schraube 2 auf die Zunge 30.

Dabei ist der Abstand zwischen Zungengelenkbereich und dem Berührbereich zwischen dem Schraubenkopf 4 und der Zunge 30 kleiner als der Abstand zwischen dem Zungengelenkbereich und einem an der Schalteinheit 5 angeordneten Druckschaltkopf 31.

Somit wird also der vom Schraubenkopf 4 zurückgelegte Hub verstärkt, so dass der auf den Druckschaltkopf 31 drückende Bereich der Zunge 30 einen entsprechend dem Hebelweg der Zunge 30 vergrößerten axialen Hub. Somit wird der Druckschaltkopf 31 von der Zunge 30 abhängig von der Position des Schraubenkopfes 4 eingedrückt zur Schalteinheit 5 hin, die somit bei Erreichen einer kritischen Position ausgelöst wird, also schaltet.

Mittels der Zunge 30 wird also der Hub der Ankerscheibe vergrößert, um ein sicheres Betätigen des Druckschaltkopfes 31 zu bewirken bei Erreichen der kritischen Axialposition.

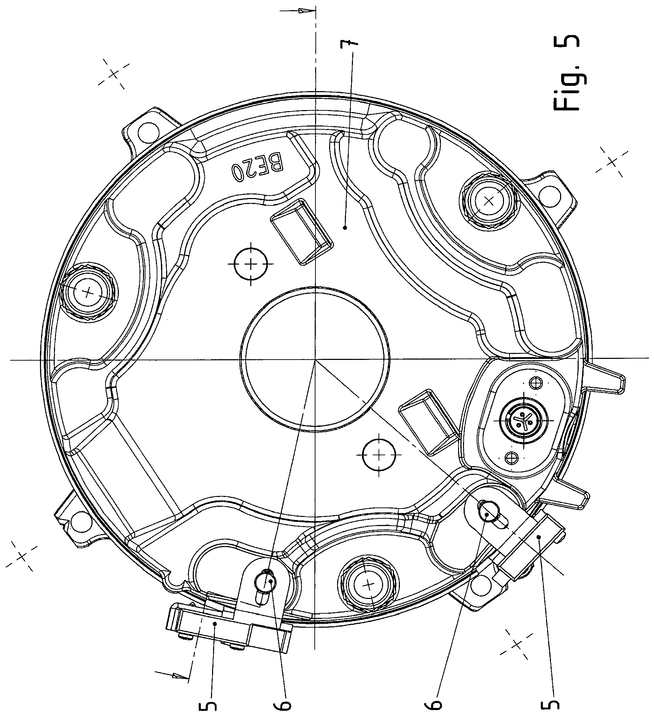

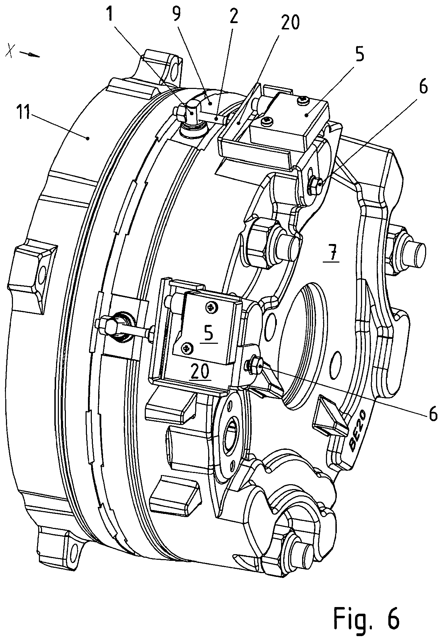

Wie in Figur 5 und in Figur 6 gezeigt, sind an der Bremsanordnung zwei Schalteinheiten in derselben beschriebenen Weise über Halteteile befestigt und deren jeweiliger Druckschaltkopf 31 betätigt unter Verwendung einer jeweiligen Zunge 30 des jeweiligen Halteteils 20. Die jeweilige Schraube 2 ist verschieden weit eingeschraubt in den Bolzen 1. Somit ist mit der ersten Schalteinheit 5 die Funktion der Bremse, also das Lüften beziehungsweise Einfallen Detektierbar, und mit der zweiten Schalteinheit 5 der Verschleiß überwachbar.

Die Schalteinheiten 5 sind in Umfangsrichtung beabstandet.

Die Ankerscheibe 9 ist aus einem ferromagnetischen Material, vorzugswiese Stahl.

Der Spulenkern 7 ist aus einem ferromagnetischen Stahlguss gefertigt, vorzugsweise ein GGG-Guss.

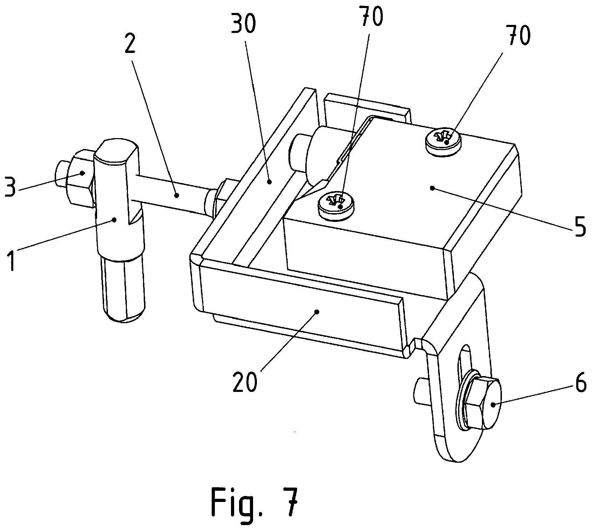

Wie in Figur 7 deutlich gezeigt, ist die Schalteinheit 5 an dem Halteteil 20 mittels Schrauben 70 befestigt, die im Wesentlichen in radialer Richtung mit ihrer Schraubenachse ausgerichtet sind.

Die Schraube 6 zur Befestigung des Halteteils 20 am Spulenkern 7 ist in axialer Richtung ausgerichtet, weil sie durch eine Ausnehmung einer heruntergebogenen Lasche, insbesondere um 90° heruntergebogenen Lasche, des Halteteils 20 geführt ist.

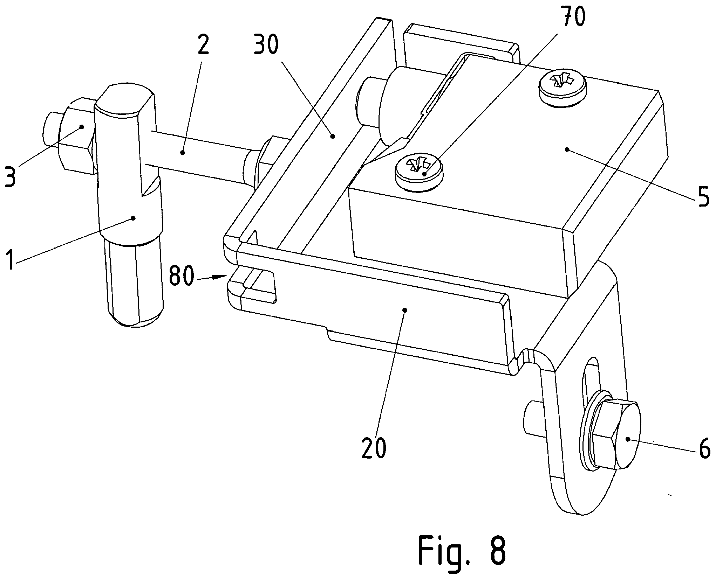

Wie in Figur 8 gezeigt, wird die Auslenkbarkeit der Zunge 30 durch eine im Gelenkbereich der Zunge 30 angeordnete Ausnehmung 80 verbessert. Die dadurch bewirkte Erhöhung der Biegsamkeit, also der Elastizität in diesem Bereich, ist alternativ oder zusätzlich durch eine Verengung und/oder durch eine Wandstärkeverdünnung in diesem Beriech, insbesondere im Vergleich zu einem Bereich der Zunge 30, erreichbar beziehungsweise verbesserbar.

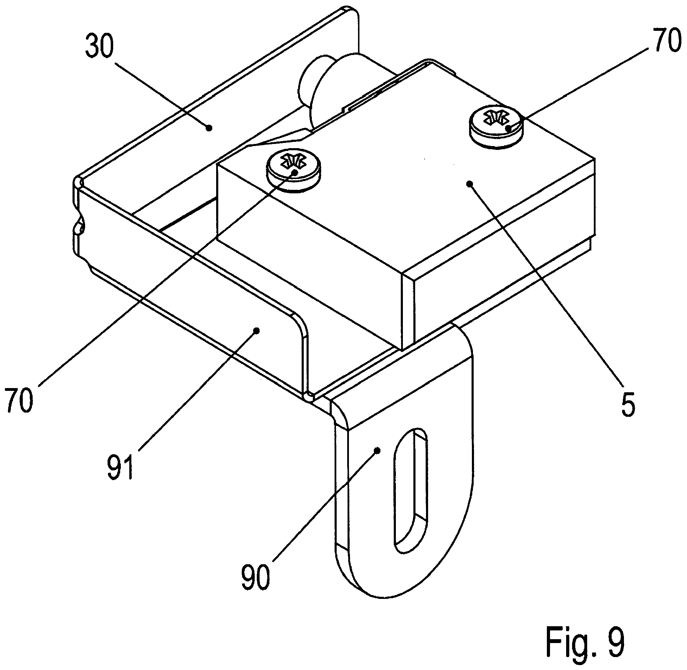

Wie in Figur 9 gezeigt, ist das Halteteil 20 auch als zweigeteilt ausgeführtes Halteteil ausführbar. Dabei weist das Halteteil ein Unterteil 90 und ein Oberteil 91 auf. Unterteil 90 und Oberteil 91 sind jeweils als Stanz-Biegeteil ausgeführt, weisen aber zueinander unterschiedliche Blechstärken auf. Somit ist die Elastizität der Zunge 30 durch entsprechend dünnwandiges Ausführen des Oberteils 91 erhöht und trotzdem eine stabile Halterung mittels des Unterteils 90 erreichbar.

Mittels der Schrauben 70 werden Unterteil 90, Oberteil 91 und Schalteinheit 5 verbunden.

Das Unterteil 90 ist mittels einer Schraube 6 mit dem Spulenkern 7 schraubverbunden.

### Bezugszeichenliste

1 Bolzen
2 Schraube mit Schraubkopf 4
3 Kontermutter
4 Schraubkopf der Schraube 2
5 Schalteinheit
6 Schraube
7 Spulenkern
8 Spule, insbesondere Ringwicklung
9 Ankerscheibe
10 Belagträger
11 Gehäuseteil mit Bremsfläche, insbesondere Lagerschild mit Bremsfläche
12 Mitnehmerverzahnung
20 Halteteil, insbesondere Stanz-Biegeteil
30 Zunge des Halteteils 20
31 Druckschaltkopf
70 Schraube
80 Ausnehmung
90 Unterteil des Halteteils
91 Oberteil des Halteteils

## Patentansprüche

1. Bremsanordnung, insbesondere aufweisend eine elektromagnetisch betätigbare Federdruckbremse,
wobei eine Ankerscheibe (3) verschiebbar, insbesondere axial verschiebbar, angeordnet ist,
insbesondere drehfest verbunden ist mit einem Spulenkern einer Wicklung, insbesondere einer Bremsspule,
wobei eine Schalteinheit (5) einen verschiebbaren Druckschaltkopf (31) aufweist, mit dem die Schalteinheit betätigbar ist,
**dadurch gekennzeichnet, dass**
die Schalteinheit, insbesondere das Gehäuse der Schalteinheit, mit einem Halteteil (20) verbunden ist, an welchem eine elastisch auslenkbare Zunge (30), insbesondere eine gegenüber dem Gehäuse der Schalteinheit elastisch auslenkbare Zunge angeordnet ist, insbesondere ausgeformt ist,
wobei eine Übertragungseinheit an der Ankerscheibe verbunden ist und die Zunge an einem ersten Bereich berührt und auslenkt
wobei die Zunge (30) den Druckschaltkopf (31) an einem vom ersten Bereich beabstandeten zweiten Bereich berührt.

2. Bremsanordnung nach Anspruch 1,
**dadurch gekennzeichnet, dass**
eine weitere, in Umfangsrichtung zur erstgenannten beabstandete Schalteinheit vorgesehen ist, wobei jede der beiden Schalteinheiten einen jeweiligen verschiebbaren Druckschaltkopf aufweist, mit dem die jeweilige Schalteinheit betätigbar ist,
wobei die weitere Schalteinheit, insbesondere das Gehäuse der weiteren Schalteinheit, mit einem weiteren Halteteil verbunden ist, an welchem eine weitere elastisch auslenkbare Zunge, insbesondere eine gegenüber dem weiteren Gehäuse der weiteren Schalteinheit elastisch auslenkbare Zunge angeordnet ist, insbesondere ausgeformt ist,
wobei eine weitere Übertragungseinheit an der Ankerscheibe verbunden ist und die weitere Zunge an einem weiteren ersten Bereich berührt und auslenkt
wobei die weitere Zunge den jeweiligen Druckschaltkopf an einem vom weitere ersten Bereich beabstandeten weiteren zweiten Bereich berührt.

3. Bremsanordnung nach mindestens einem der vorangegangenen Ansprüche,
**dadurch gekennzeichnet, dass**
die Zunge (30) an einem als Gelenk wirksamen Bereich mit dem restlichen Halteteil verbunden ist, insbesondere wobei der als Gelenk wirksame Bereich als Drehgelenk ausgeführt ist oder wobei er einteilig und/oder einstückig am Halteteil ausgebildet ist, insbesondere als Stanz-Biegeteil,
insbesondere wobei im als Gelenk wirksamen Bereich eine Materialverdünnung ausgeformt ist, insbesondere eine Verengung und/oder eine Wandstärkeverdünnung und/oder eine Ausnehmung (80) ausgestanzt ist, insbesondere so dass die Materialverdünnung in diesem Bereich eine höhere elastische Biegsamkeit bewirkt im Vergleich zu einem Bereich der Zunge.

4. Bremsanordnung nach mindestens einem der vorangegangenen Ansprüche,
**dadurch gekennzeichnet, dass**
das Halteteil ein Stanz-Biegeteil ist.

5. Bremsanordnung nach mindestens einem der vorangegangenen Ansprüche,
**dadurch gekennzeichnet, dass**
die Zunge (30) den Hub der Ankerscheibe vergrößert, indem der zweite Bereich weiter entfernt ist vom als Gelenk wirksamen Bereich als der erste Bereich.

6. Bremsanordnung nach mindestens einem der vorangegangenen Ansprüche,
**dadurch gekennzeichnet, dass**
die Übertragungseinheit einen Bolzen (1) aufweist, der formschlüssig mit der Ankerscheibe (9) verbunden ist, insbesondere eingepresst, eingeschraubt und/oder geschweißt,
wobei in eine Gewindebohrung des Bolzens eine Schraube eingeschraubt ist, insbesondere die mit einer Kontermutter (3) am Bolzen fixiert ist,
wobei der Schraubenkopf der Schraube die Zunge berührt, insbesondere im ersten Bereich.

7. Bremsanordnung nach mindestens einem der vorangegangenen Ansprüche,
**dadurch gekennzeichnet, dass**
die Verschiebungsrichtung der Ankerscheibe (9) und die Betätigungsrichtung des Druckschaltkopfes parallel angeordnet sind.

8. Bremsanordnung nach mindestens einem der vorangegangenen Ansprüche,
**dadurch gekennzeichnet, dass** der Bolzen (1) radial ausgerichtet ist, wobei die axiale Richtung von der Wellenachse der von der Bremsanordnung abzubremsenden beziehungsweise abgebremsten Welle, insbesondere Rotorwelle eines Elektromotors, definiert ist.

9. Bremsanordnung nach mindestens einem der vorangegangenen Ansprüche,
**dadurch gekennzeichnet, dass**
die Schraubenachse der Schraube (2) in axialer Richtung ausgerichtet ist, insbesondere wobei die Zunge im Wesentlichen in axialer Richtung auslenkbar ist.

10. Bremsanordnung nach mindestens einem der vorangegangenen Ansprüche,
**dadurch gekennzeichnet, dass**
die von der Bremsanordnung abzubremsende Welle eine Außenverzahnung aufweist, mit welcher die Innenverzahnung (12) eines Bremsbelagträgers im Eingriff steht, so dass dieser axial verschiebbar aber drehfest mit der Welle verbunden ist,
wobei der Bremsbelagträger (10) axial auf der von der Ankerscheibe abgewandten Seite angeordnet ist,
wobei der Bremsbelagträger axial zwischen Ankerscheibe und einem eine Bremsfläche aufweisenden Teil angeordnet ist, insbesondere wobei das Teil ein Gehäuseteil eines Elektromotors ist, insbesondere ein Lagerschild, welches ein Lager der Welle aufnimmt,
wobei Federelemente zwischen Ankerscheibe und Spulenkern (7) angeordnet sind, so dass bei Bestromung der im Spulenkern aufgenommenen Wicklung, insbesondere in einem ringförmigen Ausnehmung aufgenommenen Ringwicklung, die Ankerscheibe entgegen der von den Federelementen erzeugten Federkraft zum Spulenkern hin verschoben wird.

11. Bremsanordnung nach mindestens einem der vorangegangenen Ansprüche,
**dadurch gekennzeichnet, dass**
das Halteteil (20) zumindest zweiteilig ausgeführt ist, insbesondere also aus mindestens zwei Teilen.

12. Bremsanordnung nach Anspruch 11, **dadurch gekennzeichnet, dass**
die zumindest zwei Teile zueinander unterschiedliche Wandstärke aufweisen.

13. Bremsanordnung nach mindestens einem der Ansprüche 11 oder 12, **dadurch gekennzeichnet, dass**
die zumindest zwei Teile des Halteteils (20) Stanz-Biegeteile sind, insbesondere mit jeweils unterschiedlicher Blechwandstärke.

14. Bremsanordnung nach mindestens einem der Ansprüche 11 bis 13, **dadurch gekennzeichnet, dass**
an einem ersten Teil, insbesondere Oberteil (91), die Zunge ausgebildet ist und ein oder das andere Teil, insbesondere Unterteil (90) eine größere Wandstärke, insbesondere Blechwandstärke, aufweist als das Oberteil (91).

## Claims

1. A brake arrangement, in particular having an electromagnetically actuable spring-operated brake,
wherein an armature disc (3) is displaceably, in particular axially displaceably, arranged, in particular connected in a torsion-resistant manner to a coil core of a winding, in particular a brake coil,
wherein a switch unit (5) has a displaceable pressure switch head (31) with which the switch unit is actuable,
**characterised in that**
the switch unit, in particular the housing of the switch unit, is connected to a holding part (20) on which a resiliently deflectable tongue (30), in particular a tongue which is resiliently deflectable with respect to the housing of the switch unit, is arranged, in particular formed,
wherein a transmission unit is connected to the armature disc and contacts and deflects the tongue at a first region,
wherein the tongue (30) contacts the pressure switch head (31) at a second region, which is spaced from the first region.

2. The brake arrangement according to Claim 1,
**characterised in that**
a further switch unit, which is spaced from the first switch unit in the circumferential direction, is provided, wherein each of the two switch units has a respective displaceable pressure switch head with which the respective switch unit is actuable,
wherein the further switch unit, in particular the housing of the further switch unit, is connected to a further holding part on which a further resiliently deflectable tongue, in particular a tongue which is resiliently deflectable with respect to the further housing of the further switch unit, is arranged, in particular formed,
wherein a further transmission unit is connected to the armature disc and contacts and deflects the further tongue at a further first region,
wherein the further tongue contacts the respective pressure switch head at a further second region, which is spaced from the further first region.

3. The brake arrangement according to at least one of the preceding claims,
**characterised in that**
the tongue (30) is connected to the remaining holding part at a region acting as a joint, in particular wherein the region acting as a joint is designed as a rotary joint or wherein it is formed in one piece and/or integrally on the holding part, in particular as a punched and bent part,
in particular wherein, in the region acting as a joint, a material reduction is formed, in particular a narrowing and/or a wall thickness reduction and/or a recess (80) is punched out, in particular so that the material reduction in this region brings about a greater resilient flexibility compared to a region of the tongue.

4. The brake arrangement according to at least one of the preceding claims,
**characterised in that**
the holding part is a punched and bent part.

5. The brake arrangement according to at least one of the preceding claims,
**characterised in that**
the tongue (30) increases the stroke of the armature disc **in that** the second region is further removed from the region acting as a joint than the first region.

6. The brake arrangement according to at least one of the preceding claims,
**characterised in that**
the transmission unit has a bolt (1) which is connected with form fit to the armature disc (9), in particular pressed in, screwed in and/or welded, wherein a screw is screwed into a threaded bore of the bolt, which screw in particular is fixed to the bolt by a counter nut (3),
wherein the screw head of the screw contacts the tongue, in particular in the first region.

7. The brake arrangement according to at least one of the preceding claims,
**characterised in that**
the displacement direction of the armature disc (9) and the actuating direction of the pressure switch head are arranged parallel.

8. The brake arrangement according to at least one of the preceding claims,
**characterised in that**
the bolt (1) is aligned radially, wherein the axial direction is defined by the shaft axis of the shaft which is to be braked or is braked by the brake arrangement, in particular the rotor shaft of an electric motor.

9. The brake arrangement according to at least one of the preceding claims,
**characterised in that**
the screw axis of the screw (2) is aligned in the axial direction, in particular wherein the tongue is deflectable substantially in the axial direction.

10. The brake arrangement according to at least one of the preceding claims,
**characterised in that**
the shaft to be braked by the brake arrangement has an external gearing with which the internal gearing (12) of a brake pad carrier is in engagement so that this latter is connected to the shaft in an axially displaceable but torsion-resistant manner,
wherein the brake pad carrier (10) is arranged axially on the side remote from the armature disc,
wherein the brake pad carrier is arranged axially between the armature disc and a part having a brake contact surface, in particular wherein the part is a housing part of an electric motor, in particular a bearing shield, which receives a bearing of the shaft, wherein spring elements are arranged between the armature disc and the coil core (7) so that, when a current is fed through the winding received in the coil core, in particular a ring winding received in an annular recess, the armature disc is displaced towards the coil core in opposition to the spring force generated by the spring elements.

11. The brake arrangement according to at least one of the preceding claims,
**characterised in that**
the holding part (20) is designed in at least two parts, therefore in particular comprising at least two parts.

12. The brake arrangement according to Claim 11,
**characterised in that**
the at least two parts have mutually different wall thicknesses.

13. The brake arrangement according to at least one of Claims 11 or 12,
**characterised in that**
the at least two parts of the holding part (20) are punched and bent parts, in particular each having different sheet metal wall thicknesses.

14. The brake arrangement according to at least one of Claims 11 to 13,
**characterised in that**
the tongue is formed on a first part, in particular an upper part (91), and another part or the other part, in particular a lower part (90), has a greater wall thickness, in particular sheet metal wall thickness, than the upper part (91).

## Revendications

1. Ensemble de frein, en particulier présentant un frein à pression de ressort à actionnement électromagnétique,
sachant qu'un disque d'induit (3) est disposé mobile en translation, en particulier mobile en translation axiale, en particulier est relié en solidarité de rotation à un noyau de bobine d'un bobinage, en particulier d'une bobine de frein,
sachant qu'une unité de commutation (5) présente une tête de commutation à pression (31) mobile en translation, qui permet d'actionner l'unité de commutation,
**caractérisé en ce que** l'unité de commutation, en particulier le boîtier de l'unité de commutation, est relié(e) à un élément de maintien (20) sur lequel est disposée, en particulier est façonnée, une languette (30) pouvant être déviée élastiquement, en particulier une languette pouvant être déviée élastiquement par rapport au boîtier de l'unité de commutation,
sachant qu'une unité de transmission est reliée au disque d'induit et que la languette entre en contact avec une première région et la dévie,
sachant que la languette (30) entre en contact avec la tête de commutation à pression (31) sur une deuxième région distante de la première région.

2. Ensemble de frein selon la revendication 1, **caractérisé en ce qu'**il est prévu une autre unité de commutation, distante de la première citée en direction périphérique, sachant que chacune des deux unités de commutation présente une tête de commutation à pression respective mobile en translation, qui permet d'actionner l'unité de commutation respective,
sachant que l'autre unité de commutation, en particulier le boîtier de l'autre unité de commutation, est relié(e) à un autre élément de maintien sur lequel est disposée, en particulier est façonnée, une autre languette pouvant être déviée élastiquement, en particulier une languette pouvant être déviée élastiquement par rapport à l'autre boîtier de l'autre unité de commutation,
sachant qu'une autre unité de transmission est reliée au disque d'induit et que l'autre languette entre en contact avec une autre première région et la dévie,
sachant que l'autre languette entre en contact avec la tête de commutation à pression respective sur une autre deuxième région distante de l'autre première région.

3. Ensemble de frein selon au moins une des revendications précédentes, **caractérisé en ce que** la languette (30) est reliée au reste de l'élément de maintien sur une région jouant le rôle d'articulation, sachant en particulier que la région jouant le rôle d'articulation est réalisée sous forme d'articulation tournante, ou sachant qu'elle est réalisée d'un seul tenant et/ou formée d'un seul tenant sur l'élément de maintien, en particulier sous forme de pièce découpée et pliée,
sachant en particulier qu'un amincissement de matière est formé dans la région jouant le rôle d'articulation, en particulier un rétrécissement et/ou un amincissement de l'épaisseur de paroi, et/ou qu'un évidement (80) y est découpé, de sorte en particulier que l'amincissement de matière produit dans cette région une plus grande flexibilité élastique par rapport à une région de la languette.

4. Ensemble de frein selon au moins une des revendications précédentes, **caractérisé en ce que** l'élément de maintien est une pièce découpée et pliée.

5. Ensemble de frein selon au moins une des revendications précédentes, **caractérisé en ce que** la languette (30) augmente la course du disque d'induit, par le fait que la deuxième région est plus éloignée de la région jouant le rôle d'articulation que la première région.

6. Ensemble de frein selon au moins une des revendications précédentes, **caractérisé en ce que** l'unité de transmission présente un boulon (1) qui est relié par complémentarité de forme au disque d'induit (9), en particulier par emmanchement, vissage et/ou soudage,
sachant qu'une vis est vissée dans un perçage fileté du boulon, en particulier vis qui est fixée en position sur le boulon par un contre-écrou (3),
sachant que la tête de la vis entre en contact avec la languette, en particulier dans la première région.

7. Ensemble de frein selon au moins une des revendications précédentes, **caractérisé en ce que** la direction de translation du disque d'induit (9) et la direction d'actionnement de la tête de commutation à pression sont disposées en parallèle.

8. Ensemble de frein selon au moins une des revendications précédentes, **caractérisé en ce que** le boulon (1) est orienté radialement, sachant que la direction axiale est définie par l'axe de l'arbre à freiner ou freiné par l'ensemble de frein, en particulier l'arbre de rotor d'un moteur électrique.

9. Ensemble de frein selon au moins une des revendications précédentes, **caractérisé en ce que** l'axe de la vis (2) est orienté en direction axiale,
sachant en particulier que la languette peut être déviée sensiblement en direction axiale.

10. Ensemble de frein selon au moins une des revendications précédentes, **caractérisé en ce que** l'arbre à freiner par l'ensemble de frein présente une denture extérieure avec laquelle est en prise la denture intérieure (12) d'un support de garniture de frein, de sorte que ce dernier est relié à l'arbre en solidarité de rotation mais à mobilité axiale,
sachant que le support de garniture de frein (10) est disposé axialement sur le côté éloigné du disque d'induit,
sachant que le support de garniture de frein est disposé axialement entre le disque d'induit et un élément présentant une surface de freinage, sachant en particulier que l'élément est un élément de boîtier d'un moteur électrique, en particulier un flasque qui reçoit un palier de l'arbre,
sachant que des éléments à effet de ressort sont disposés entre le disque d'induit et le noyau de bobine (7), de sorte que, lorsque le bobinage reçu dans le noyau de bobine est alimenté en courant, en particulier un bobinage annulaire reçu dans un évidement annulaire, le disque d'induit est déplacé en direction du noyau de bobine à l'encontre de la force de ressort produite par les éléments à effet de ressort.

11. Ensemble de frein selon au moins une des revendications précédentes, **caractérisé en ce que** l'élément de maintien (20) est réalisé au moins en deux parties, en particulier donc est constitué d'au moins deux parties.

12. Ensemble de frein selon la revendication 11, **caractérisé en ce que** les au moins deux parties présentent des épaisseurs de paroi différentes l'une de l'autre.

13. Ensemble de frein selon au moins une des revendications 11 ou 12, **caractérisé en ce que** les au moins deux parties de l'élément de maintien (20) sont des pièces découpées et pliées, en particulier avec des épaisseurs de paroi de tôle respectives différentes.

14. Ensemble de frein selon au moins une des revendications 11 à 13, **caractérisé en ce que** la languette est formée sur une première partie, en particulier une partie supérieure (91), et une ou l'autre partie, en particulier une partie inférieure (90), présente une plus grande épaisseur de paroi, en particulier épaisseur de paroi de tôle, que la partie supérieure (91).
